# EUROPEAN PATENT SPECIFICATION

(11) **EP 2 677 210 B1**
(45) Date of publication and mention of the grant of the patent: **20.04.2016**
(21) Application number: 12172597.2
(22) Date of filing: 19.06.2012
(51) Int. Cl.: F16H 61/00

(54) **Gearbox hydraulic circuit**
Getriebehydraulikkreislauf
Circuit hydraulique de boîte de vitesses

(43) Date of publication of application: 25.12.2013
(73) Proprietor: Turner Powertrain Systems Limited, West Midlands Wolverhampton, WV6 0QT (GB)
(72) Inventor: Wootton, John, WOLVERHAMPTON, West Midlands WV6 0QT (GB)
(74) Representative: Modiano, Micaela Nadia

(56) References cited:
- EP-A1- 1 279 868
- FR-A1- 2 570 521
- US-A- 4 515 176
- US-A- 4 831 896

## Description

### Technical Field

This disclosure generally relates to hydraulic control systems for work machines, and more particularly to gearbox hydraulic circuits for work machines.

### Background

FR 2 570 521 discloses an hydraulic circuit comprising:
a hydraulic pump connected to a fluid reservoir, the hydraulic pump being operable to generate a flow of pressurised fluid;
a pressure circuit connected to the hydraulic pump to convey the flow of pressurised fluid, the pressure circuit having a first line and a second line ;
a pressure control valve disposed in the pressure circuit between the first line and the second line to maintain the pressure of the pressurised fluid in the first line.

Vehicles, such as, for example, highway trucks and work machines, may include hydraulic control systems having hydraulic pumps. Hydraulic pumps may be used in various applications. Work machines, such as hydraulic excavators, back hoes or loaders, may have hydraulic pumps that are engine driven to generate a flow of pressurised fluid. The pressurised fluid may be used for a variety of purposes during operation of the vehicle. A work machine, for example, may use pressurised fluid to drive the machine or to move a work tool, such as a boom or a shovel.

The hydraulic pump may draw fluid, for example oil, from a fluid reservoir and pressurises the fluid. The pressurised fluid may be directed through fluid lines of a circuit during machine operations. The hydraulic pump may be a variable displacement pump or a constant displacement pump.

The hydraulic systems may be closed loop circuits or open loop circuits for control of driving unit of the work machines. However, fluid flowing through the hydraulic circuit may escape through internal leaks in the pump and motor. Such leakage may result in a decrease of system pressure below acceptable margins. Further, fluid circulating in the fluid lines may overheat under heavy operation conditions. To compensate for leakage and overheated fluid, the circuits may have constant displacement pumps which are also known as charge pumps. The charge pumps may provide hydraulic power proportional to engine output at a constant pressure.

However, parasitic power losses may be a concern with all hydraulic systems including charge pumps. Unused excess hydraulic power may contribute to parasitic loss. Unused excess hydraulic power may occur during operating conditions where the fluid is pressurised to a level substantially greater than that required. Such an operating condition may occur when the charge pump pressurises fluid flow to the driving unit when the machine is stationery but undergoing a work operation. It has been observed that when the machine operates under such conditions, the pressurisation of the fluid may be significantly reduced.

The present disclosure is directed, at least in part, to improving or overcoming one or more aspects of the prior art system.

### Brief Summary of the Invention

In a first aspect, the present disclosure describes a gearbox hydraulic circuit comprising a hydraulic pump connected to a fluid reservoir, the hydraulic pump being operable to generate a flow of pressurised fluid; a pressure circuit connected to the hydraulic pump to convey the flow of pressurised fluid, the pressure circuit having a first line and a second line; a pressure control valve disposed in the pressure circuit between the first line and the second line to maintain the pressure of the pressurised fluid in the first line; and a shunt connected to the pressure circuit, the shunt being operable to route the flow of pressurised fluid from the first line to the second line thereby reducing the pressure in the first line.

In a second aspect, the present disclosure describes a method of regulating fluid pressure in a gearbox hydraulic circuit comprising the steps of generating a flow of pressurised fluid with a hydraulic pump connected to a fluid reservoir, conveying the flow of pressurised fluid through a pressure circuit connected to the hydraulic pump, the pressure circuit having a first line and a second line; maintaining the pressure of the pressurised fluid in the first line with a pressure control valve disposed in the pressure circuit between the first line and the second line; and routing the flow of pressurised fluid from the first line to the second line through a shunt connected to the pressure circuit.

### Brief Description of the Drawings

The foregoing and other features and advantages of the present disclosure will be more fully understood from the following description of various embodiments, when read together with the accompanying drawing, in which:

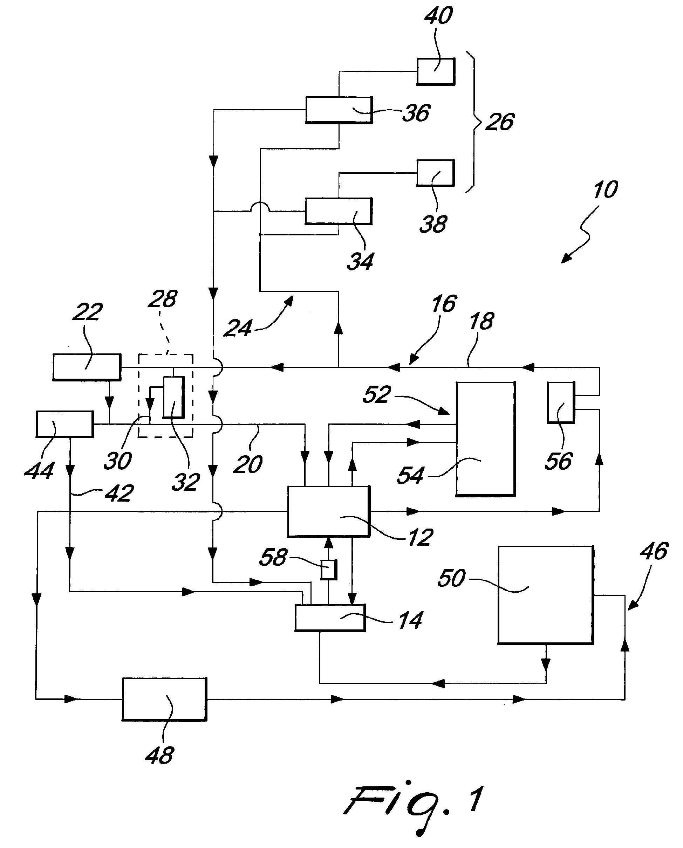

Fig. 1 is a schematic representation of a gearbox hydraulic circuit according to the present disclosure.

### Detailed Description

This disclosure generally relates to a gearbox hydraulic circuit **10** for a work machine. With reference to Fig. 1, the gearbox hydraulic circuit **10** may comprise a hydraulic pump **12.** The hydraulic pump **12** may be disposed in a gearbox. The hydraulic pump **12** may generate a flow of pressurised fluid which may be required to operate gearbox systems. The pressurised fluid may be used to operate steering or driving units.

The hydraulic pump **12** may be a constant displacement charge pump, a variable displacement pump or fixed displacement variable flow pump.

Hydraulic pump **12** may include a pumping element which is operable to increase the pressure of the fluid. The pumping element may include a series of driven pistons. The pumping element may be a gear, or a vane pump. The hydraulic pump **12** may pressurise fluid to a pressure between 10 bar (1000 Kpa) to 30 bar (3000 Kpa). Preferably, the hydraulic pump **12** may pressurise fluid to a pressure between 15 bar (1500 Kpa) to 20 bar (2000 Kpa). Preferably, the hydraulic pump **12** may pressurise fluid to a pressure of 16 bar (1600 Kpa).

The gearbox hydraulic circuit **10** may include a fluid reservoir **14** that contains a supply of fluid, such as an oil sump. Fluid reservoir **14** may also form a part of a lubrication system for the work machine. The fluid within fluid reservoir **14** may be a hydraulic fluid, for example, a lubricating oil. Fluid reservoir **14** may have other types of fluids.

Hydraulic pump **12** may have a housing with multiple inlets and outlets. An inlet may be connected to fluid reservoir **14** through a fluid line to receive fluid therefrom. Fluid from fluid reservoir **14** may be drawn therefrom as hydraulic pump **12** generates the pressurised fluid flow. A suction strainer **58** may be disposed in the fluid line through which fluid flows from fluid reservoir **14** to hydraulic pump **12.**

An outlet of hydraulic pump **12** may be connected to fluid reservoir **14** through a fluid line. Fluid may flow from the outlet to fluid reservoir **14** through the fluid line.

In an embodiment, a supply pump may be provided in the gearbox hydraulic circuit **10.** The supply pump may be a low pressure pump relative to the hydraulic pump **12,** such as a sump pump. Supply pump may supply fluid to the hydraulic pump **12.**

Gearbox hydraulic circuit **10** may comprise a pressure circuit **16.** Pressure circuit **16** may be connected to an outlet of hydraulic pump **12.** Pressurised fluid generated by hydraulic pump **12** may be conveyed through pressure circuit **16.** Pressurised fluid may be conveyed to an inlet of the hydraulic pump **12.**

Fluid in pressure circuit **16** may be directed to control units for control of gearbox systems, such as a steering system, a clutch system or a driving system.

Pressure circuit **16** may have a first line **18** connected to an outlet of the hydraulic pump **12.** Pressure circuit **16** may have a second line **20** connected to an inlet of the hydraulic pump **12.**

An oil filter **56** may be disposed in first line **18.** Pressurised fluid from the hydraulic pump may flow through oil filter **56.**

Gearbox hydraulic circuit **10** may comprise a pressure control valve **22.** Pressure control valve **22** may be disposed in the pressure circuit **16.** Pressure control valve **22** may be positioned between the first line **18** and the second line **20** of pressure circuit **16.** Pressurised fluid flowing through first line **18** may enter an inlet of pressure control valve **22.** Pressurised fluid may exit from an outlet of pressure control valve **22** and flow into second line **20** when pressure in first line **18** exceeds a predetermined value.

Pressure control valve **22** may maintain the pressure of the pressurised fluid in the first line **18.** Pressure control valve **22** may maintain the pressurised fluid in the first line **18** at a pressure of fluid leaving the hydraulic pump **12.** The pressure control valve **22** may maintain fluid pressure between 10 bar (1000 Kpa) to 30 bar (3000 Kpa). Preferably, the pressure control valve **22** may maintain fluid pressure between 15 bar (1500 Kpa) to 20 bar (2000 Kpa). Preferably, tpressure control valve **22** may maintain fluid pressure at 16 bar (1600 Kpa).

The pressure of the fluid in pressure circuit **16** may be maintained at a level for control of gearbox systems, such as clutch control or driving system, through respective control units.

Gearbox hydraulic circuit **10** may comprise a shunt **28.** Shunt **28** may be connected to pressure circuit **16.** Shunt **28** may be operable to route the flow of pressurised fluid from first line **18** to second line **20** of pressure circuit **16.**

Shunt **28** may comprise a shunt line **30** which interconnects first line **18** and second line **20.** Shunt **28** may comprise a shunt valve **32** disposed in shunt line **30.** Shunt valve **32** may be connected in parallel to pressure control valve **22** within pressure circuit **16.** Shunt valve **32** may be manually actuatable. Shunt valve **32** may be automatically actuatable.

Shunt valve **32** may be closed so that pressurised fluid may only leave first line **18** either through pressure control valve **22** or through fluid lines connected to control units. Shunt valve **32** may be actuated to open to allow pressurised fluid to flow through shunt line **30.** The flow of pressurised fluid from first line **18** to second line **20** may reduce the overall pressure in the first line **18.** Shunt valve **32** may be actuated to close when pressure in the first line **18** is required to return to a normal operating level for the control unit.

Gearbox hydraulic circuit **10** may further comprise a clutch rail **24.** Clutch rail **24** may be connected to first line **18.** Clutch rail **24** may convey the flow of pressurised fluid to a clutch control unit **26.** In an embodiment, clutch rail **24** may convey a portion of the pressurised fluid flowing through first line **18** to a clutch control unit **26.**

Clutch control unit **26** may comprise a first solenoid valve **34** and a second solenoid valve **36.** Clutch rail **24** may further comprise fluid lines which carry pressurised fluid from first line **18** to first solenoid valve **34** and second solenoid valve **36.** Clutch rail **24** may further comprise fluid lines which carry pressurised fluid from first solenoid valve **34** and second solenoid valve **36** to fluid reservoir **14.**

Clutch control unit **26** may comprise a first clutch **38** and a second clutch **40.** First solenoid valve **34** may control the flow of pressurised fluid to first clutch **38.** Second solenoid valve **36** may control the flow of pressurised fluid to second clutch **40.**

In an embodiment, first solenoid valve **34** may be a forward solenoid for controlling first clutch **38** which may be a forward clutch. Second solenoid valve **36** may be a reverse solenoid for controlling second clutch **40** which may be a reverse clutch.

In an embodiment, gearbox hydraulic circuit **10** may comprise a plurality of solenoid valves for controlling the flow of pressurised fluid to a plurality of clutches. In an embodiment, a clutch arrangement may have two forward clutches. A forward clutch may be for a low range and a second clutch may be for high range. In an embodiment, a clutch arrangement may have a forward, a reverse and three speed clutches.

In an embodiment, shunt line **30** may be connected to first line **18** between pressure control valve **22** and clutch rail **24.** The point of connection of shunt line **30** may be located between pressure control valve **22,** connected between first line **18** and second line **20,** and the point of connection of the fluid line of clutch rail **24** and first line **18.**

In an embodiment, shunt line **30** may be connected to first line **18** between hydraulic pump **12** and clutch rail **24.** The point of connection of shunt line **30** may be located between hydraulic pump **12** and the point of connection of the fluid line of clutch rail **24** and first line **18**.

Gearbox hydraulic circuit **10** may further comprise a relief line **42** which connects second line **20** and fluid reservoir **14.** A relief valve **44** may be disposed in relief line **42.** Relief valve **44** may reduce the pressure of the pressurised fluid in second line **20** to a predetermined value by allowing fluid to flow through relief line **42** from second line **20** to fluid reservoir **14.** The predetermined pressure for fluid in the second line **20** may be lower than the pressure of fluid in the first line **18.**

Gearbox hydraulic circuit **10** may further comprise a torque converter circuit **52.** Fluid lines may connect the hydraulic pump **12** to the torque converter **54.** In an embodiment, second line **20** may be connected, through specific fluid paths within the hydraulic pump **12,** to a fluid line of torque converter circuit **52.** The fluid pressure in the fluid line leading to torque converter **54** may be substantially equal to the fluid pressure in second line **20.**

A lubricant and cooling circuit **46** may be connected to the hydraulic pump **12.** A fluid line may connect hydraulic pump **12** to an oil cooler **48.** Fluid from oil cooler **48** may flow to a transmission **50.** Fluid from transmission **50** may flow to fluid reservoir **14.** The lubricant and cooling circuit **46** may be a component of the gearbox hydraulic circuit **10.**

The pressure of fluid in the gearbox hydraulic circuit **10** may be regulated as required. A method of regulating fluid pressure in the gearbox hydraulic circuit **10** may comprise a step of generating a flow of pressurised fluid with a hydraulic pump **12** which is connected to a fluid reservoir **14** for supply of the fluid. The method may comprise conveying the flow of pressurised fluid through the pressure circuit **16** that is connected to the hydraulic pump **12.** The pressure circuit **16** may have as fluid lines, the first line **18** and the second line **20.** The method may comprise maintaining the pressure of the pressurised fluid in first line **18** with a pressure control valve **22** disposed in the pressure circuit **16** between first line **18** and second line **20.** The method may comprise routing the flow of pressurised fluid from first line **18** to second line **20** through a shunt **28** connected to pressure circuit **16.**

Shunt **28** may comprise shunt line **30** interconnecting first line **18** and second line **20** and a shunt valve **32** disposed in the shunt line **30.** The flow of pressurised fluid may be routed through the shunt **28** when shunt valve **32** is actuated from closed to open. The flow of pressurised fluid through the shunt **28** may be stopped by actuating shunt valve **32** from opened to close.

The method may further comprise conveying flow of pressurised fluid to a clutch control unit **26** through a clutch rail **24** connected to the first line **18.**

The skilled person would appreciate that foregoing embodiments may be modified or combined to obtain the gearbox hydraulic circuit **10** of the present disclosure.

### Industrial Applicability

This disclosure describes a gearbox hydraulic circuit **10** which may reduce consumption of engine power. Gearbox hydraulic circuit **10** may reduce fluid pressure when such fluid pressure is not required.

Work machines, for example a backhoe loader, may be stationery when the work tool or implement, for example a backhoe, is being operated. In this situation the gearbox may not be in use as the work machine is not moving. Pressurised fluid may not be required in the clutch rail **24.** Even though the machine is stationery the hydraulic pump **12** may continue to be driven.

The fluid pressure is maintained in the pressure circuit **16** by hydraulic pump **12** and pressure control valve **22.** The engine power is consumed by hydraulic pump **12** which works against the pressurised fluid in the pressure circuit **16.** Thus engine power is consumed by the hydraulic pump **12** even when the pressure is not required.

The shunt **28** may be actuated to allow pressurised fluid to flow through an alternative route bypassing the pressure control valve **22** thereby decreasing the pressure of the fluid in the pressure circuit **16.** The decrease in fluid pressure reduces the amount power consumed by hydraulic pump **12.**

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

## Claims

1. A gearbox hydraulic circuit (10) comprising:
a hydraulic pump (12) connected to a fluid reservoir (14), the hydraulic pump (12) being operable to generate a flow of pressurised fluid;
a pressure circuit (16) connected to the hydraulic pump (12) to convey the flow of pressurised fluid, the pressure circuit (16) having a first line (18) and a second line (20);
a pressure control valve (22) disposed in the pressure circuit (16) between the first line (18) and the second line (20) to maintain the pressure of the pressurised fluid in the first line (18); and
a shunt (28) connected to the pressure circuit (16), the shunt (28) being operable to route the flow of pressurised fluid from the first line (18) to the second line (20).

2. The gearbox hydraulic circuit (10) of claim 1 wherein the shunt (28) comprises a shunt line (30) interconnecting the first line (18) and the second line (20) and a shunt valve (32) disposed in the shunt line (30).

3. The gearbox hydraulic circuit (10) of claim 2 wherein shunt valve (32) is connected in parallel to the pressure control valve (22).

4. The gearbox hydraulic circuit (10) of any one of preceding claims further comprising a clutch rail (24) connected to the first line (18) to convey the flow of pressurised fluid to a clutch control unit (26).

5. The gearbox hydraulic circuit (10) of claim 4 wherein the clutch control unit (26) comprises first and second solenoid valves (34, 36) to control flow of pressurised fluid to first and second clutches (38, 40).

6. The gearbox hydraulic circuit (10) of claim 4 wherein the first and second solenoid valves (34, 36) are forward and reverse valves and first and second clutches (38, 40) are forward and reverse clutches.

7. The gearbox hydraulic circuit (10) of claim 4, 5 or 6 wherein the shunt line (30) is connected to the first line (18) between the pressure control valve (22) and the clutch rail (24).

8. The gearbox hydraulic circuit (10) of claim 4, 5 or 6 wherein the shunt line (30) is connected to the first line (18) between the clutch rail (24) and the hydraulic pump (12).

9. The gearbox hydraulic circuit (10) of any one of preceding claims 2 to 8 wherein the shunt valve (32) is manually actuatable.

10. The gearbox hydraulic circuit (10) of any one of preceding claims 2 to 8 wherein the shunt valve (32) is automatically actuatable.

11. The gearbox hydraulic circuit (10) of any one of preceding claims wherein the hydraulic pump (12) is a constant displacement pump.

12. A work machine comprising a gearbox hydraulic circuit (10) of any one of the preceding claims.

13. A method of regulating fluid pressure in a gearbox hydraulic circuit (10) according to any one of preceding claims 1 to 10, the method comprising the steps of:
generating a flow of pressurised fluid with a hydraulic pump (12) connected to a fluid reservoir (14),
conveying the flow of pressurised fluid through a pressure circuit (16) connected to the hydraulic pump (12), the pressure circuit (16) having a first line (18) and a second line (20);
maintaining the pressure of the pressurised fluid in the first line (18) with a pressure control valve (22) disposed in the pressure circuit (16) between the first line (18) and the second line (20); and
routing the flow of pressurised fluid from the first line (18) to the second line (20) through a shunt (28) connected to the pressure circuit (16).

14. The method of claim 13 wherein the shunt (28) comprises a shunt line (30) interconnecting the first line (18) and the second line (20) and a shunt valve (32) disposed in the shunt line (30).

15. The method of claim 13, or 14 further comprising the step of conveying flow of pressurised fluid to a clutch control unit (26) through a clutch rail (24) connected to the first line (18).

## Patentansprüche

1. Ein Getriebe-Hydraulikkreislauf (10), der Folgendes umfasst:
eine Hydraulikpumpe (12), verbunden mit einem Fluidreservoir (14), wobei die Hydraulikpumpe (12) arbeitsfähig ist, um eine Strömung von unter Druck gesetztem Fluid zu erzeugen;
einen Druckkreislauf (16), verbunden mit der Hydraulikpumpe (12), um die Strömung von unter Druck gesetztem Fluid zu fördern, wobei der Druckkreislauf (16) eine erste Leitung (18) und eine zweite Leitung (20) hat;
ein Druckregelventil (22), das in dem Druckkreislauf (16) zwischen der ersten Leitung (18) und der zweiten Leitung (20) angeordnet ist, um den Druck des unter Druck gesetzten Fluids in der ersten Leitung (18) aufrechtzuerhalten; und
einen Nebenschluss (28), verbunden mit dem Druckkreislauf (16), wobei der Nebenschluss (28) arbeitsfähig ist, um die Strömung von unter Druck gesetztem Fluid von der ersten Leitung (18) zur zweiten Leitung (20) zu leiten.

2. Der Getriebe-Hydraulikkreislauf (10) gemäß Anspruch 1, wobei der Nebenschluss (28) eine Nebenschlussleitung (30) umfasst, welche die erste Leitung (18) und die zweite Leitung (20) miteinander verbindet, und ein Nebenschlussventil (32), das in der Nebenschlussleitung (30) angeordnet ist.

3. Der Getriebe-Hydraulikkreislauf (10) gemäß Anspruch 2, wobei das Nebenschlussventil (32) parallel zum Druckregelventil (22) angeschlossen ist.

4. Der Getriebe-Hydraulikkreislauf (10) gemäß einem beliebigen der obigen Ansprüche, der weiter eine Kupplungsschiene (24) umfasst, die mit der ersten Leitung (18) verbunden ist, um die Strömung von unter Druck gesetztem Fluid an eine Kupplungssteuereinheit (26) zu leiten.

5. Der Getriebe-Hydraulikkreislauf (10) gemäß Anspruch 4, wobei die Kupplungsregeleinheit (26) erste und zweite Magnetventile (34, 36) umfasst, um die Strömung von unter Druck gesetztem Fluid an erste und zweite Kupplungen (38, 40) zu steuern.

6. Der Getriebe-Hydraulikkreislauf (10) gemäß Anspruch 4, wobei die ersten und zweiten Magnetventile (34, 36) Vorwärts- und Rückwärts-Steuerventile sind und die ersten und zweiten Kupplungen (38, 40) Vorwärts- und Rückwärtskupplungen sind.

7. Der Getriebe-Hydraulikkreislauf (10) gemäß Anspruch 4, 5 oder 6, wobei die Nebenschlussleitung (30) an die erste Leitung (18) wischen dem Druckregelventil (22) und der Kupplungsschiene (24) angeschlossen ist.

8. Der Getriebe-Hydraulikkreislauf (10) gemäß Anspruch 4, 5 oder 6, wobei die Nebenschlussleitung (30) an die erste Leitung (18) zwischen der Kupplungsschiene (24) und der Hydraulikpumpe (12) angeschlossen ist.

9. Der Getriebe-Hydraulikkreislauf (10) gemäß einem beliebigen der obigen Ansprüche 2 bis 8, wobei das Nebenschlussventil (32) manuell betätigt werden kann.

10. Der Getriebe-Hydraulikkreislauf (10) gemäß einem beliebigen der obigen Ansprüche 2 bis 8, wobei das Nebenschlussventil (32) automatisch betätigt werden kann.

11. Der Getriebe-Hydraulikkreislauf (10) gemäß einem beliebigen der obigen Ansprüche, wobei die Hydraulikpumpe (12) eine Pumpe mit konstantem Förderstrom ist.

12. Eine Arbeitsmaschine, die einen Getriebe-Hydraulikkreislauf (10) gemäß einem beliebigen der obigen Ansprüche umfasst.

13. Ein Verfahren zum Regeln des Fluiddrucks in einem Getriebe-Hydraulikkreislauf (10) gemäß einem beliebigen der obigen Ansprüche 1 bis 10, wobei das Verfahren folgende Schritte umfasst:
Erzeugen einer Strömung von unter Druck gesetztem Fluid mit einer Hydraulikpumpe (12), die mit einem Fluidreservoir (14) verbunden ist,
Fördern der Strömung von unter Druck gesetztem Fluid durch einen Druckkreislauf (16), der mit der Hydraulikpumpe (12) verbunden ist, wobei der Druckkreislauf (16) eine erste Leitung (18) und eine zweite Leitung (20) hat;
Aufrechterhalten des Drucks des unter Druck gesetzten Fluids in der ersten Leitung (18) mit einem Druckregelventil (22), das in dem Druckkreislauf (16) zwischen der ersten Leitung (18) und der zweiten Leitung (20) angeordnet ist; und
Lenken der Strömung des unter Druck gesetzten Fluids von der ersten Leitung (18) zur zweiten Leitung (20) durch einen Nebenschluss (28), der mit dem Druckkreislauf (16) verbunden ist.

14. Das Verfahren gemäß Anspruch 13, wobei der Nebenschluss (28) eine Nebenschlussleitung (30) umfasst, die die erste Leitung (18) und die zweite Leitung (20) verbindet, und ein Nebenschlussventil (32), das in der Nebenschlussleitung (30) angeordnet ist.

15. Das Verfahren gemäß Anspruch 13 oder 14, das weiter den Schritt der Förderung der Strömung von unter Druck gesetztem Fluid an eine Kupplungsregeleinheit (26) durch eine Kupplungsschiene (24) umfasst, die mit der ersten Leitung (18) verbunden ist.

## Revendications

1. Circuit hydraulique (10) de boîte de vitesses, comportant :
une pompe hydraulique (12) reliée à une bâche (14) de fluide, la pompe hydraulique (12) servant à créer un flux de fluide sous pression ;
un circuit de pression (16) relié à la pompe hydraulique (12) pour acheminer le flux de fluide sous pression, le circuit de pression (16) ayant une première conduite (18) et une seconde conduite (20) ;
un régulateur de pression (22) disposé dans le circuit de pression (16) entre la première conduite (18) et la seconde conduite (20) pour maintenir la pression du fluide sous pression dans la première conduite (18) ; et
une dérivation (28) reliée au circuit de pression (16), la dérivation (28) servant à faire passer le flux de fluide sous pression de la première conduite (18) à la seconde conduite (20).

2. Circuit hydraulique (10) de boîte de vitesses selon la revendication 1, dans lequel la dérivation (28) comprend une conduite de dérivation (30) reliant l'une à l'autre la première conduite (18) et la seconde conduite (20) et une soupape de dérivation (32) disposée dans la conduite de dérivation (30).

3. Circuit hydraulique (10) de boîte de vitesses selon la revendication 2, dans lequel la soupape de dérivation (32) est montée en parallèle avec le régulateur de pression (22).

4. Circuit hydraulique (10) de boîte de vitesses selon l'une quelconque des revendications précédentes, comportant en outre un rail (24) d'embrayages relié à la première conduite (18) pour acheminer le flux de fluide sous pression jusqu'à une unité de commande (26) d'embrayage.

5. Circuit hydraulique (10) de boîte de vitesses selon la revendication 4, dans lequel l'unité de commande (26) d'embrayages comprend une première et une seconde électrovannes (34, 36) pour réguler l'écoulement du fluide vers un premier et un second embrayages (38, 40).

6. Circuit hydraulique (10) de boîte de vitesses selon la revendication 4, dans lequel les première et seconde électrovannes (34, 36) sont des vannes de marche avant et de marche arrière et les premier et second embrayages (38, 40) sont des embrayages de marche avant et de marche arrière.

7. Circuit hydraulique (10) de boîte de vitesses selon la revendication 4, 5 ou 6, dans lequel la conduite de dérivation (30) est reliée à la première conduite (18) entre le régulateur de pression (22) et le rail (24) d'embrayages.

8. Circuit hydraulique (10) de boîte de vitesses selon la revendication 4, 5 ou 6, dans lequel la conduite de dérivation (30) est reliée à la première conduite (18) entre le rail (24) d'embrayages et la pompe hydraulique (12).

9. Circuit hydraulique (10) de boîte de vitesses selon l'une quelconque des revendications précédentes 2 à 8, dans lequel la soupape de dérivation (32) a un fonctionnement manuel.

10. Circuit hydraulique (10) de boîte de vitesses selon l'une quelconque des revendications précédentes 2 à 8, dans lequel la soupape de dérivation (32) a un fonctionnement automatique.

11. Circuit hydraulique (10) de boîte de vitesses selon l'une quelconque des revendications précédentes, dans lequel la pompe hydraulique (12) est une pompe à débit constant.

12. Engin de travaux comportant un circuit hydraulique (10) de boîte de vitesses selon l'une quelconque des revendications précédentes.

13. Procédé de régulation de pression de fluide dans un circuit hydraulique (10) de boîte de vitesses selon l'une quelconque des revendications précédentes 1 à 10, le procédé comportant les étapes de :
création d'un flux de fluide sous pression à l'aide d'une pompe hydraulique (12) reliée à une bâche (14) de fluide,
acheminement du flux de fluide sous pression via un circuit de pression (16) reliée à la pompe hydraulique (12), le circuit de pression (16) ayant une première conduite (18) et une seconde conduite (20) ;
maintien de la pression du fluide sous pression dans la première conduite (18) à l'aide d'un régulateur de pression (22) disposé dans le circuit de pression (16) entre la première conduite (18) et la seconde conduite (20) ; et
passage du flux de fluide sous pression du premier conduit (18) au second conduit (20) via une dérivation (28) reliée au circuit de pression (16).

14. Procédé selon la revendication 13, dans lequel la dérivation (28) comprend une conduite de dérivation (30) reliant l'une à l'autre la première conduite (18) et la seconde conduite (20) et une soupape de dérivation disposée dans la conduite de dérivation (30).

15. Procédé selon la revendication 13 ou 14, comportant en outre l'étape d'acheminement d'un flux de fluide sous pression jusqu'à une unité de commande (26) d'embrayages via un rail (24) d'embrayages relié à la première conduite (18).
